# EUROPEAN PATENT APPLICATION

(11) **EP 3 944 444 A1**
(43) Date of publication of application: **26.01.2022**
(21) Application number: 21191918.8
(22) Date of filing: 27.04.2018
(51) Int. Cl.: H02H 5/04, A47J 37/06, A47J 37/07, H02H 3/10

(54) **WIRELESS CONTROL AND STATUS MONITORING FOR ELECTRIC GRILL WITH CURRENT PROTECTION CIRCUITRY**

(30) Priority: 05.05.2017 US 201715493611
(62) Divisional of application: 18169824.2
(71) Applicant: Weber-Stephen Products LLC, Palatine IL 60067 (US)
(72) Inventor: KNAPPENBERGER, Eric, Chicago, IL 60614 (US); ZULETA, Julio C., Gilberts, IL 60136 (US); LERCH, Matthew, Chicago, IL 60625 (US); EMMERICH, Jeffery C., WI 53115, 53115 (US)
(74) Representative: FRKelly

(57) **Abstract**

Provided is an apparatus and method for protecting against unsafe electric current conditions. A protections circuit may be used in a device, such as an electric grill, that has one or more electric loads, such as heating elements. The protection circuit may protect against various failure scenarios, including, without limitation, instances of ground fault, over current, driver failure, and failure of a microprocessor. The microprocessor may further be in wireless communication with a remote device and wirelessly communicate error codes indicative of an error, and receive control signals from the remote device for controlling temperature or turning the grill off. The remote device may also receive operating parameters and create a log of the electric grill's conditions at the time of an error.

## Description

### Field of the Invention

The present inventions relate generally to electric grills and more particularly, to electric grills having advanced circuitry to protect against dangerous, faulty and unexpected current conditions. The electric grill may further includes a wireless controller for wirelessly communicating with a remote device in order to transfer operating parameters and to wirelessly control and monitor the grill.

### Background of the Invention

There is an increasing desire for electric grills. This is particularly true because the urban population is expanding. Many urban or other environments may not easily permit the use of traditional gas or charcoal grills. For example, many urban dwellers live in apartments or condominiums having balconies where they would like to use a grill. Because of smoke, gas or other concerns, use of typical charcoal or gas grills may not be permitted or desirable.

There are a number of available electric cooking devices, such as the George Foreman Plate Grill (and similar devices), panini presses, electric griddles and the like. However, these prior art electric cooking devices are typically intended for indoor use and are not designed or constructed for use in harsh or caustic environments where they may be degraded by high heat, weather conditions such as sun and rain, as well as fats from foods or acids from cleaning agents. These harsh conditions may cause the electrical components to degrade, which in turn may lead to electrical current leakage or other unsafe conditions.

Because prior art electric cooking devices are generally intended for indoor environments, a typical wall outlet's current protection scheme is generally sufficient for these devices. Such devices may also rely on a ground line for protection. Some prior art circuits include metal-oxide-semiconductor field-effect transistors (MOSFETs) to regulate current. Yet other prior art circuits are thermally-responsive. However, there is a need for advanced protection circuitry in an electric grill that can respond to the failure of components, including but not limited to those which cause improper current conditions, such as those that may be found in or caused by harsh environments.

For example, U.S. Patent 8,263,911, entitled "Electronic Device with Heating Protection Circuit and Heating Protection Method Thereof," discloses an electronic device in which a control signal generated by a control module can assist the heating protection circuit in correctly determining whether a heating signal is failed or whether a control voltage of a control element is abnormal, and then automatically control the heating module to stop heating. The heating protection circuit uses a MOSFET coupled with a control module and a heating switch module. By contrast, some embodiments of the present invention use a combination of electro-mechanical and digital logic to detect multiple different types of failure conditions that simply cannot be detected by a MOSFET heating protection circuit.

Other prior art devices, referred to as thermally-responsive circuits, may shut down when a heating element reaches a threshold temperature. For example, U.S. Patent 8,097,835, entitled "Temperature Control Circuit," discloses a temperature detecting module which detects the temperature of the electronic device for outputting a detection signal to a protection module and microprocessors. The protection module controls the status of the microprocessor. But such thermally responsive circuits are inadequate for harsh environments and current conditions which may lead to component failures. In fact, failed components may lead to current leakage, which does not always correlate with an overheated heating element. Dangerous current conditions may occur even if a heating element is within normal temperatures.

Thus, there is a need for an electric grill, including a grill with one or more independently controlled heating elements, having protection circuitry that protects against, among others things, short circuits, overcurrent, driver failure and/or microcontroller failure. Moreover, there is also a need for embodiments for an electric grill capable of communicating wirelessly with a remote device, such as a cell phone or tablet, to control the electric grill and convey operational information to a user. Such an electric grill can be monitored remotely by a user, where the user may be able to view operational information and control the grill remotely. For example, the electric grill may wirelessly convey operational parameters including include the cooking status of the electric grill, as well as an indication of whether the electric grill is operating normally (and if not, indicating which type of error has occurred).

### Brief Summary of the Inventions

The present inventions overcome many of the deficiencies of known electric cooking devices and provide new features and advantages for electric grills. For example, the present inventions provide protection circuitry that shuts off power to the heating element or elements in the case of faulty, unexpected and/or dangerous current conditions. Moreover, embodiments of the present inventions provide an electric grill that is in wireless communication with a remote device and communicates various operational information, including the occurrence of dangerous current conditions, to a user.

The present inventions generally provide an electric grill with circuitry and a microprocessor configured to protect against unsafe electric current conditions. For example, embodiments of the inventions include a system for monitoring a status of an electric grill, the system having at least one heating element connectable to a voltage line and a neutral line; a Hall Effect sensor configured to measure current passing to said at least one heating element, a ground fault detection unit configured to detect a ground fault error between the voltage line and the neutral line; a wireless controller; and a microprocessor, the microprocessor being in communication with the Hall Effect sensor, the ground fault detection unit, and the wireless controller; wherein the microprocessor is adapted and configured to wirelessly send and receive signals to and from a remote device via the wireless controller.

Moreover, the microprocessor may be adapted and configured to identify an overcurrent error by comparing a current reading from the Hall Effect sensor to a predetermined current threshold, and to wirelessly send an error code to the remote device in response to an overcurrent error. The microprocessor may be adapted and configured to identify a current error by comparing a current reading from the Hall Effect sensor to an expected current, and to wirelessly send an error code to the remote device in response to a current error. Further yet, the microprocessor may be adapted and configured to receive a signal indicative of a ground fault error from the ground fault detection unit, and is further adapted and configured to wirelessly send an error code to the remote device in response to a ground fault error.

In some embodiments, the microprocessor is connected to a relay or a triac driver for controlling the current delivered to the at least one heating element. In additional features, the microprocessor may be adapted and configured to wirelessly receive an "off' signal from the remote device and, in response, to disable current from being delivered to the at least one heating element. Further yet, embodiments may include a cook box and at least one temperature sensing device for measuring a temperature inside the cook box, wherein the temperature sensing device is in electronic communication with the microprocessor. The inventions may further comprise a display in electronic communication with the microprocessor, wherein the microprocessor is adapted and configured to display the temperature on the display. The microprocessor may be further adapted and configured to toggle between displaying the temperature in Celsius or Fahrenheit in response to a wireless signal from the remote device.

Furthermore, the microprocessor may be adapted and configured to wirelessly transmit the temperature inside the cook box to the remote device. Moreover, the microprocessor may be adapted and configured to record operating parameters of the electric grill and to wirelessly transmit the operating parameters to the remote device. The microprocessor's transmission of operating parameters may be adapted and configured to be continuous, or the microprocessor's transmission of operating parameters can be adapted and configured to be in response to an error. The operating parameters may comprise a temperature measurement. Further, the operating parameters may comprise a timer indicative of the amount of time the heating element has been active. The microprocessor may be a chip having a self-check pin, and the wireless controller may be adapter and configured to wirelessly send an erode code to the remote device in response to a self-check signal indicating a microprocessor error.

Additional embodiments provide a system for wirelessly monitoring an electric grill's status, comprising an electric grill having protection circuitry, the protection circuitry comprising a microprocessor in electronic communication with a ground fault detection unit and a Hall Effect sensor; and a wireless controller in electronic communication with the microprocessor; wherein the microprocessor is configured to receive electronic signals from the ground fault detection unit and the Hall Effect sensor; and wherein the microprocessor is further adapted and configured to determine the occurrence of an error and, in response, wirelessly communicate an error code. Further, a remote device may be adapted and configured for wireless communication with the wireless controller, wherein the remote device is adapted and configured to wirelessly receive an error code. Moreover, the remote device can be adapted and configured to display, on a display, a message indicative of the type of error corresponding to the received error code. The remote device may be a cell phone, tablet and/or a computer.

Also provided is a method for wirelessly monitoring an electric grill's status, comprising the steps of: using a microprocessor in communication with a ground fault detection unit and a Hall Effect sensor to detect an error in the electric grill's operation; transmitting, wirelessly, an error code indicative of the error to a remote device. The method may additionally include the steps of: using the microprocessor to communicate with a temperature sensing device to measure the electric grill's temperature; using the microprocessor to determine the electric grill's active time; and transmitting, wirelessly, the electric grill's temperature and active time to the remote device.

In additional embodiments, the method includes using the remote device to display, at the remote device, a message indicative of the error received; and using the remote device to create and store a log in a memory, wherein the log comprises an error code, the electric grill's temperature, and the electric grill's active time. The remote device may communicate the log over the internet. Disclosed methods further include the step of using the remote device to communicate the log over the internet; the step of displaying, on a display at the electric grill, the electric grill's temperature; and the step of using the remote device to wirelessly toggle the display between Celsius and Fahrenheit.

An object of the present inventions is to provide a protection circuit that allows an electric grill to remain in an outdoor environment for prolonged periods of time without creating dangerous electric conditions and/or which protects the components of the grill.

An additional object of the present inventions is to provide an electric grill that can safely be used in outdoor or harsh environments.

A further object of the present inventions is to provide a protection circuit that detects current leakage and responds by disabling the flow of current.

A further object of the present inventions is to provide a protection circuit that detects a ground fault and responds by disabling the flow of current.

A further object of the present inventions is to provide a protection circuit that detects an unbalanced current and responds by disabling the flow of current.

Still another object of the present inventions is to provide a protection circuit that detects an overcurrent and responds by disabling the flow of current.

Still an additional object of the present inventions is to provide a protection circuit that detects a current draw that differs from an expected current draw and responds by disabling the flow of current.

Still yet a further object of the present inventions is to provide a protection circuit that includes a microprocessor and can detect when the microprocessor enters an abnormal state of operation.

And yet another object of the present inventions is to disable current flowing through an electric grill when an unsafe operating condition or failure scenario is detected.

Further objects of the invention include wirelessly communicating an error code indicative or an error to a remote device. Moreover, objects of the invention include displaying an electric grill's operating parameters at a remote device, and controlling the electric grill from the remote device.

And still yet another object of the present inventions is to provide a protection circuit that may be used on an electric grill or other devices, for indoor and/or outdoor use, to protect against unwanted, unsafe and/or unexpected current conditions.

### Inventors' Definition of Terms

The terms used in the claims of this patent are intended to have their broadest meaning consistent with the requirements of law. Where alternative meanings are possible, the broadest meaning is intended. All words used in the claims are intended to be used in the normal, customary usage of grammar and the English language.

### Brief Description of the Drawings

The stated and unstated features, objects and advantages of the present invention (sometimes used in the singular, but not excluding the plural) will become apparent from the following description and drawings, wherein the like reference numerals represent like elements in the various views and in which:
FIG. 1A is a front view of an exemplary electric grill of the present invention.
FIG. 1B is a top schematic view through a typical cooking surface of a representative electric grill of the present invention showing internal components.
FIG. 2 is a schematic of an embodiment of a protection circuit of the present invention.
FIG. 3 is an exemplary schematic showing an isolated view of one or more heating elements driven by one or more triacs of the present invention.
FIG. 4 is an exemplary schematic showing an isolated view of a current transformer used to generate a trip control signal of the present invention.
FIG. 5 is an isolated diagram of a microprocessor and exemplary inputs and outputs that may connect to the microprocessor of the present invention.
FIG. 6 is a flow chart showing a microprocessor detecting an unexpected current or overcurrent condition of the present invention.
FIG. 7 is a schematic of an embodiment of a protection circuit of the present invention including a wireless controller.
FIG. 8A is a graph showing exemplary temperature fluctuations of an electric grill operating in a medium temperature range.
FIG. 8B is a graph showing exemplary temperature fluctuations of an electric grill operating in a low temperature range.
FIG. 8C is a graph showing exemplary temperature fluctuations of an electric grill operating at a high temperature range.
FIG. 9 is an exemplary schematic of an electric grill in wireless communication with a remote device.
FIG. 10 is an exemplary graph showing estimated ambient temperatures inside a grill box based on measurements taken near a grill's heating elements.

### Detailed Description of the Preferred Embodiments

Set forth below is a description of what is currently believed to be the preferred embodiments or best representative examples of the inventions claimed. Future and present representative or modifications to the embodiments and preferred embodiments are contemplated. Any alterations or modifications which make insubstantial changes in function, purpose, structure or result are intended to be covered by the claims of this patent. The present inventions may be used on and/or part of electric grills with a digital power supply as discussed in the co-pending patent application entitled "Digital Power Supply" filed by Applicants and having application number 15/200,759, and also the co-pending patent application entitled "Digital Power Supply with Wireless Monitoring and Control," filed on the same day as this application, both of which are assigned to Weber-Stephen Products LLC, and which are both incorporated herein by reference in their entirety.

The use of electric heating elements **103, 104** in harsh or outdoor environments creates a need for protection circuitry **100** that protects against dangerous current scenarios resulting from the potential failure or misuse of components in an electric grill **510.** The environmental conditions - including sun, rain, wind, cleaning agents, food stuffs, and the like - may degrade electrical components and lead to short circuits, leaking current, or other dangerous conditions. In some instances, components may be permanently degraded. In other instances degraded components, such as heating elements **103, 104,** may return to normal condition if they are cleaned or re-installed. In both instances, there is a need to restrict the flow of current to protect the user.

Protection circuitry **100** may protect against various failure scenarios, including, without limitation, instances of ground fault; overcurrent; driver failure; and failure of the microprocessor **113.** For example, a ground fault (or unbalanced current) occurs when the current drawn by a device such as electric grill **510** does not match the current returned by the device to the wall outlet. Often times, this indicates a current leakage. Leaking current creates a hazard to a user, especially if the current reaches the electric grill's housing **506.** In that case, the user may be shocked. In another failure scenario, degraded components may cause the electric grill **510** to draw an unsafe current load, leading to a so-called "overcurrent." That may result in component damage and eventually lead to leaking current. In yet another failure scenario, a heating element **103, 104** may receive a current load that is not necessarily unsafe, but is inconsistent with the heating element's operating mode. This inconsistency suggests a driver failure, which in turn may lead to unsafe conditions. A further failure scenario involves the failure of the microprocessor **113.** Because the microprocessor **113** controls the current delivered to the heating element(s), its failure could potentially lead to unpredictable current loads. Aspects of the present invention are designed to disable current in the event one or more failure scenarios (including those identified above) are recognized.

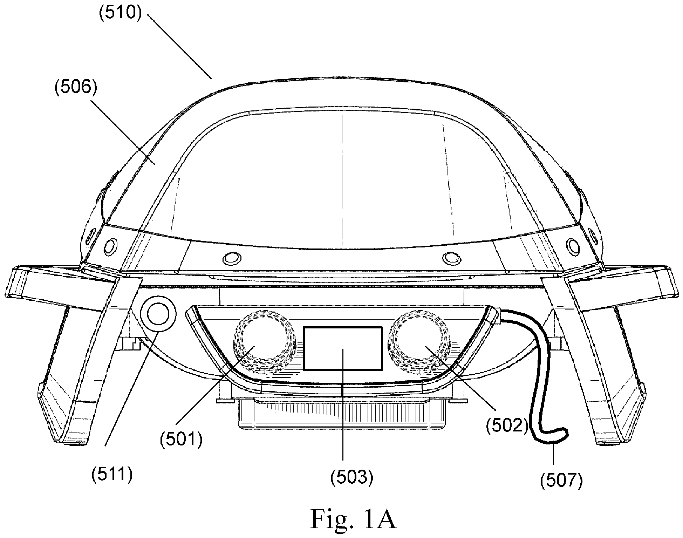

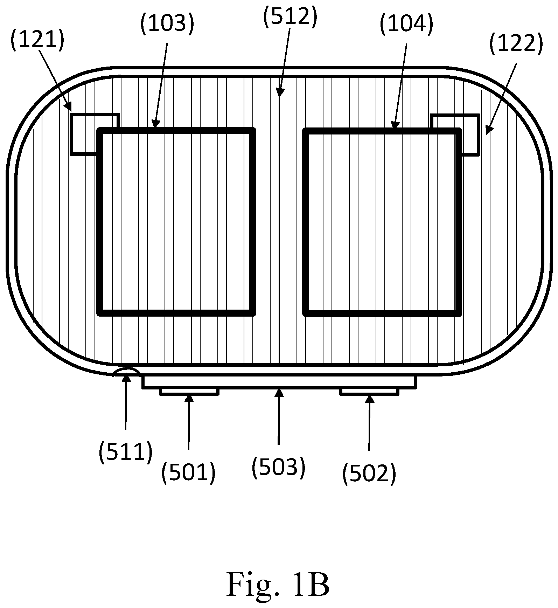

Figures 1-10 show preferred embodiments of an electric grill **510** and a preferred protection circuity **100.** By way of example, Figures 1A and 1B show a representative electric grill and some of its major components. Figure 1A shows a preferred exterior of electric grill **510,** including a housing and lid **506,** onto which left and right control knobs **501** and **502,** as well as display **503,** may be mounted. The electric grill **510** includes a power cord **507** for connecting to an AC wall outlet. Left and right control knobs **501** and **502,** and display **503,** connect to a microcontroller **113** which is described in greater detail herein. A reset button **511** may also be provided for use as hereinafter described.

As shown in Figure 1B, left and right control knobs **501** and **502** may be associated with a first and second heating element, **103** and **104,** respectively, thus creating dual cooking zones. A representative grate or cooking surface **512** is also shown in Figure 1B. Each heating element **103, 104** may be controlled independently by a knob **501, 502** or other controller or user input associated with the heating element **103, 104.** Left knob **501** and right knob **502** may be positioned on the exterior of a grill housing **506.** The knobs **501** and **502,** or any other input device that will be understood by those of skill in the art, may be connected to a microprocessor **113** to set the operating mode of one or more heating elements **103, 104.** Although Figures 1A and 1B show two knobs **501, 502** controlling two heating elements **103, 104,** it should be understood that protection circuitry **100** may be used with any combination of user input devices and heating elements, as will be understood by those of skill in the art.

Using knobs **501** and **502,** or any other input device, a user typically selects an operating mode for one or both heating elements **103** and **104.** The operating mode may include a desired temperature setting. Microprocessor **113,** described in further detail herein, controls the electric current delivered to heating elements **103** and **104** in order to achieve the desired temperature setting. Microprocessor **113** can achieve a desired temperature for each heating element **103** and **104** using a feedback loop in which it receives a current or real time temperature reading from thermocouples **121** and **122,** which may be proximally positioned by respective heating elements **103** and **104.** It should be understood that, although thermocouples are shown as an example, any known temperature sensing device may be used. A person of ordinary skill in the art would recognize that various types and numbers of knobs, touch-pad, heating elements, temperature sensors and/or displays may be used.

The electric grill **510** preferably includes a display **503** and/or other user interface. The display **503** may be connected to microprocessor **113** and display information relating to the current settings or operation of one or more of the heating elements **103, 104.** For example, the display **503** may show the current temperature of heating elements **103** and **104** (as measured by thermocouples **121** and **122**), as well as the desired temperature a user has selected via knobs **501** and/or **502.**

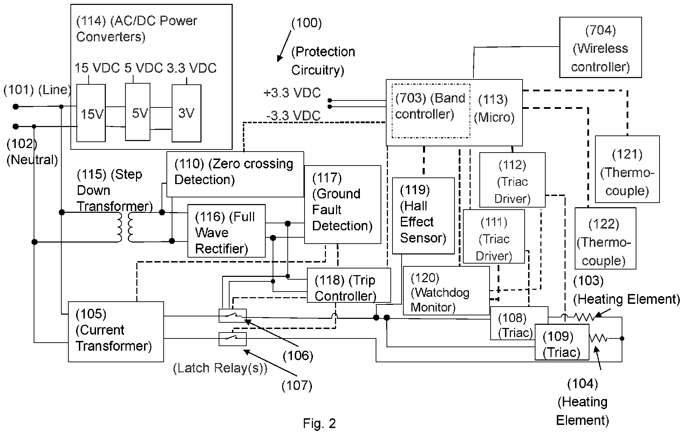

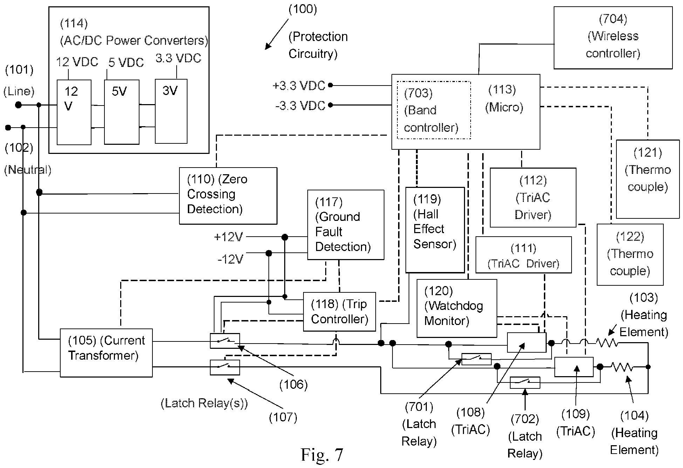

A preferred embodiment of protection circuitry **100** is shown in Figures 2 and 7, where perforated lines represent control/data lines while solid lines represent power lines. In general, non-limiting terms, Figure 2 shows hardware components and a specially configured microprocessor that can detect various failure conditions and respond by disabling the flow of current to the electric grill **510.** Protection circuitry **100** includes a current transformer **105** for measuring a potential difference, if any, between current drawn by the device and current returned from the device. A ground fault detection unit **117** is provided to evaluate the difference, if any, and activate a trip controller **118,** which would cause a latch relay **106** and/or **107** to create an open circuit and thus stop the flow of current. Moreover, a microprocessor **113** receives current readings from a Hall Effect sensor **119** and may use those current readings to detect various types of dangerous conditions. If a dangerous condition is detected, microprocessor **113** may activate the trip controller **118** to create an open circuit, or disable triac drivers **111** and/or **112** in order to prevent current from flowing to heating elements **103** and/or **104.** A watchdog monitor may optionally be provided to communicate with microprocessor **113** and to disable triacs **108** and/or **109** in the event microprocessor **113** is not communicating normally.

Line **101** and neutral **102** may draw alternating current (AC) from a typical wall outlet. A traditional power cord **507** may be used to plug line **101** and neutral **102** into an AC wall outlet using typical fixtures. Line **101** and neutral **102** also connect to a set of one or more AC/DC power converters **114** which supply the basic power needs of various components including display(s) and/or microprocessor(s). The power converters **114** convert the alternating current to direct current having lines of 3.3 Volts DC, 5 Volts DC, and 15 Volts DC. These DC lines may be used to power various components on the electric grill, such as one or more displays, microprocessor(s), etc. A person of ordinary skill would recognize that the AC/DC power converters **114** can be used to supply any level of DC voltage required by any of the electric grill's components.

Line **101** and neutral **102** further connect to current transformer **105,** which measures the difference, if any, between current going to heating elements **103** and/or **104** from line **101,** and current returning to neutral **102.** A potential difference in current, if any, is signaled to ground fault detection unit **117,** which evaluates the difference in current to determine if current is leaking. In other words, if damage to the circuit (whether temporary or permanent) has caused electric current to leak from any of the components, then the current returning through neutral **102** will be less than the current drawn in line **101.** Ground fault detection unit **117** detects that there is electric current missing. Missing current is indicative of a dangerous operating condition because it may come in contact with the user, causing an electric shock, or cause other components to fail.

In such a scenario, a desired response is to stop the flow of any current in order to avoid the risk of shock, electrocution or component damage. To cause current to stop flowing, ground fault detection unit **117** activates a trip controller **118,** which in turn opens electro-mechanical latches **106** and **107.** As shown in Figure 2, latches **106** and **107** are positioned in series with heating elements **103** and **104;** thus, tripping a latch causes an open circuit, which, by definition, stops the flow of current. Latch relays **106** and **107** may be electro-mechanical switches for creating an open circuit and may be connected via a control line to trip controller **118.** When tripped, latch relays **106** and **107** may remain open until a user engages a mechanical switch. As one example, a reset button **511** or other mechanical switch on the housing **506** may be associated with the latch relays **106** and **107** to reset them into a closed position after they have been tripped.

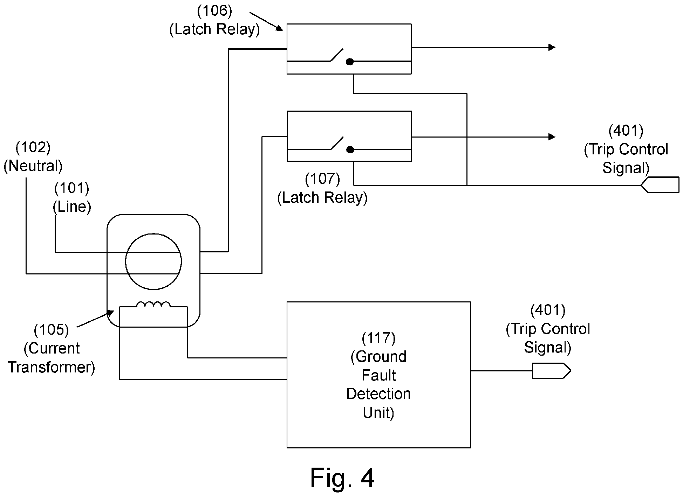

An exemplary embodiment of ground fault detection unit **117** interacting with latch relays **106** and **107** is best shown in Figure 4. As a non-limiting example, ground fault detection unit **117** may be a ground fault interrupter such as part number FAN4146ESX, made by Fairchild Semiconductor. The current transformer **105** is positioned to measure the current difference, which is read by ground fault detection unit **117.** Ground fault detection unit **117** generates a trip control signal **401** if the current difference exceeds a safety threshold, in which case trip control signal **401** is fed back to latch relays **106** and **107,** creating an open circuit and stopping the flow of current. A user turning on a device in which current is leaking will be protected because the tripping of latch relays **106** and **107** will cause an open circuit, thereby minimizing the risk of electric shock to the user or further damage to the equipment. A person of skill in the art would recognize that a certain tolerance in current difference may be allowable.

Again by reference to Figure 2, a step-down transformer **115** is provided because ground fault detection unit **117** operates at a lower voltage than that drawn from line **101** and neutral **102.** Line **101** and neutral **102** are connected to step-down transformer **115,** which provides a lower secondary voltage through a full wave rectifier **116** to ground fault detection unit **117** and also to a trip controller **118.** The step down transformer **115** has the benefit of isolating the ground fault detection unit **117** and trip controller **118** from the high voltage of line **101** and neutral **102.** Instead, they operate at the lower secondary voltage. A person of skill in the art would recognize that step-down transformers are used to isolate components operating at a lower voltage. Step down transformer **115** has the additional benefit of separating ground fault detection unit **117** from microprocessor **113,** which provides added protection in the event that microprocessor **113** fails during a ground fault/unbalanced current. Microprocessor **113**'s failure would not prevent ground fault detection unit **117** from recognizing a ground fault/unbalanced current. Likewise, a failure of ground fault detection unit **117** would not prevent microprocessor **113** from continuing to monitor current conditions.

During normal operation, microprocessor **113** controls the heat and temperature setting by controlling the flow of electricity to heating elements **103** and **104.** Microprocessor **113** may also be configured to detect and respond to abnormal operating conditions, i.e. conditions having an increased risk of electrocution, shock or component damage. A discussion of microprocessor **113**'s functionality during normal operating conditions is provided, followed by specific configurations that allow microprocessor **113** to detect and respond to failure conditions.

During normal operating conditions, microprocessor **113** controls the electricity (and thus, the heat and temperature) to heating elements **103** and **104** from line **101** and neutral **102.** The electric path runs through line **101** and neutral **102,** which are connected through current transformer **105,** and further through a series of latch relays **106** and **107** and triacs **108** and **109.** As will be understood, triacs are three electrode devices, or triodes, that conduct alternating current. Triacs are a type of solid state bidirectional switch. The protection circuit **100** disclosed herein describes the use of triacs to control current flowing to heating elements **103** and **104,** however it will be understood that other solid state bidirectional switches may be used in place of a triacs consistent with the present inventions. Heating elements **103** and **104** may be resistive heaters which increase in temperature as more current passes through them. Other types of heating elements **103, 104** may also be used as will be understood by those of skill in the art.

Triac drivers **111** and **112** control triacs **108** and **109** by "opening" and "closing" them to allow or prevent current from passing to heating elements **103** and **104.** A person of ordinary skill in the art would recognize that triac drivers are used to control a high voltage triac with a low voltage DC source (such as a microprocessor) (Figure 2). Moreover, triac drivers **111, 112** are used to isolate devices from a potentially high current or voltage in a triac. Triac drivers **111** and **112** interface between microprocessor **113** and triacs **108** and **109** while at the same time keeping microprocessor **113** isolated from voltages and currents in triacs **108** and **109.**

In order to achieve a user's desired temperature during normal operation, microprocessor **113** controls current delivered to the heating elements **103** and **104** by activating (or deactivating) triacs **108** and **109** via their triac drivers **111, 112.** In other words, microprocessor **113** controls the current drawn, and thus the temperature, of heating elements **103** and **104** by controlling the triac drivers **111** and **112.** A disabled triac **108** and/or **109** creates an open circuit through which no current can flow.

To recognize when a desired temperature has been achieved, microprocessor **113** may receive temperature feedback from one or more thermocouples **121** and **122** located proximately to each heating element **103** and **104,** or elsewhere throughout the cook box. Figure 1B shows a representative example of thermocouples **121** and **122** adjacent to each heating element **103** and **104.** The feedback is used by microprocessor **113** to adjust the current delivered to the heating elements **103, 104** until the desired temperatures selected by knobs **501** and/or **502** is achieved. As a result, a user can select a desired operating mode (independently) for heating elements **103** and **104** and microprocessor **113** will control the current delivered until a desired temperature setting is reached.

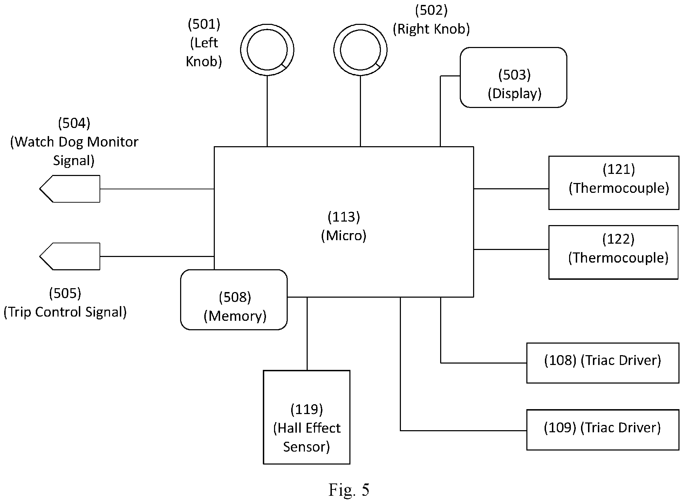

Figure 5 shows exemplary inputs and outputs to and from microprocessor **113,** which can use the feedback from the thermocouple **121** and/or **122** to adjust current flowing to a heating element **103** and/or **104** until a desired temperature is reached. The desired temperature may be selected by a user through a user interface, such as knobs **501** or **502,** and communicated electronically to microprocessor **113.** A person of ordinary skill in the art would know understand that the microprocessor **113** may include and communicate with an internal or external memory **508** containing the software instructions for executing the calculations and comparisons, as well as other settings described herein.

As an optional input example, microprocessor **113** may receive a control signal from a zero crossing detection unit **110** (Figure 2). The zero crossing detection unit **110** sends a control signal each time the alternating current, as measured through step down transformer **115,** crosses zero. Using this signal, microprocessor **113** can identify the present status of an alternating current's wave form. Tracking the zero crossings enables microprocessor **113** to turn triacs **108** and **109** on and off in a manner that reduces the harmonics introduced.

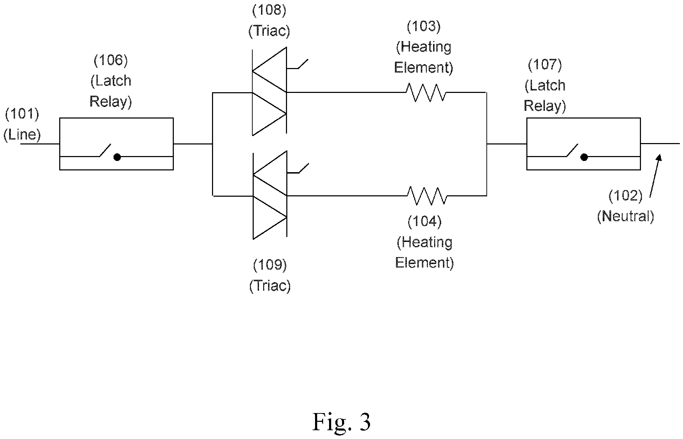

Microprocessor **113** may be configured to identify dangerous conditions that arise during normal operation. Although ground fault detection unit **117** detects a leaking current, there are other dangerous conditions that microprocessor **113** is specifically configured to detect and respond to. As seen in Figure 2, microprocessor **113** is in communication with trip controller **118** and triac drivers **111** and **112,** thus giving microprocessor **113** two different ways to stop a flow of current - by tripping a latch **106** or **107,** or by disable triacs **108** and/or **109** if it detects a failure condition. For example, Figure 3 shows that heating elements **103** and **104** are in series with triacs **108, 109** and with latches **106, 107.** As a practical matter, opening one of the latches **106, 107** or both of the triacs **108, 109** will stop the flow of all current.

As one example, microprocessor **113** may be configured to respond to an "overcurrent" scenario. Overcurrent conditions are dangerous because they are associated with an increased risk of component failure and/or damage to electronic circuitry, which in turn may be a precursor to current leakage. An overcurrent scenario occurs when a circuit draws more current than it is safely rated to handle. An overcurrent may occur if a harsh environment causes the resistance value of some components, such as heating elements, to change, resulting in a higher current draw. However, an overcurrent scenario does not necessarily correlate to a mismatch in current. Therefore, ground fault detection unit **117** may not detect an overcurrent and it may be desirable to configure microprocessor **113** to recognize it. To that end, a Hall Effect Sensor **119** sends microprocessor **113** a current reading indicative of the current flowing through triacs **108** and **109.** A Hall Effect sensor **119** measures the current being delivered through one or more of the triacs and to heating elements **103** and **104.** The protection circuitry described herein discloses a Hall Effect sensor **119** that is used to measure current, but a person of skill in the art would recognize that any suitable current sensor may be used in place of Hall Effect sensor **119.** The Hall Effect sensor **119** is connected to microprocessor **113** via a control line to convey to microprocessor **113** how much current is being delivered through the heaters **103, 104.**

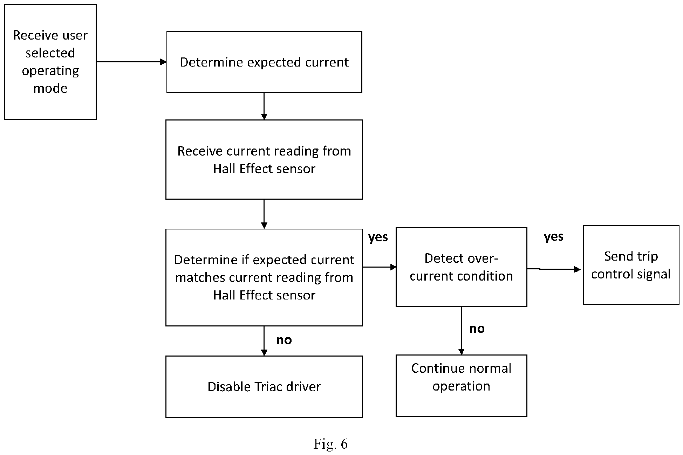

The Hall Effect sensor **119** measures the current delivered to heating elements **103** and **104** and sends a current measurement to microprocessor **113** via a control/data line. The Hall Effect sensor **119** may be configured to measure the current through the voltage line **101,** or to measure both of the two currents going to the individual heating elements **103** and **104.** In either configuration, the current reading is communicated to the microprocessor **113.** Figures 2 and 5 show a connection between microprocessor **113** and Hall Effect sensor **119.** Figure 6 shows microprocessor **113** sending a trip control signal if it detects an overcurrent condition. In Figure 2, Hall Effect Sensor **119** is shown to measure the combined current in the power line leading to triac **108** and **109.** A person of ordinary skill in the art would recognize that a possible alternative configuration would be to connect one Hall Effect sensor to the node of each triac, thereby measuring the current to each individual triac rather than the combined current.

To recognize an overcurrent condition, microprocessor **113** compares the current reading from Hall Effect Sensor **119** with a predetermined threshold current level at which the circuit may safely operate. The predetermined threshold is the threshold for an overcurrent condition. The predetermined threshold current level may be chosen based on any number of considerations, including the maximum current at which the heating element **103, 104** may operate, or the maximum current at which any of the other components in the circuit may operate. Microprocessor **113** compares the current measured by Hall Effect sensor **119** to the predetermined threshold current level. If the current exceeds the threshold, there exists a potential overcurrent condition and the flow of current should be stopped. To stop the flow of current, microprocessor **113** sends a trip control signal **505** to trip controller **118,** which is connected via control/data line. Trip controller **118** responds by tripping latch relays **106** and **107,** causing an open circuit with respect to the heating elements and thereby stopping the flow of current. Exemplary inputs from the Hall Effect sensor **119** to microprocessor **113,** and the trip control signal **505** from microprocessor **113,** are shown in Figure 5.

In some embodiments, microprocessor **113** may additionally be configured to recognize when heating elements **103** and **104** draw a current that is within a safe range, but which is different from the current expected to be drawn given a heating element's selected operating mode. For example, a potentially dangerous scenario may occur when a heating element is set to a "LOW" temperature but drawing current reserved for a "HIGH" temperature, or vice versa. If a user has set a heating element **103** and/or **104** to a high temperature, but only a low current is being delivered, it is likely a component has failed. Possible causes of such a scenario include, without limitation, a harsh or caustic environment corroding Hall Effect sensor **119** or a failure of triacs **108, 109** or triac drivers **111, 112.**

Microprocessor **113** may use a feedback loop from thermocouples **121** and **122** to deliver current to a heating element **103** and/or **104** until a desired temperature is achieved. The desired temperature may then be maintained at a steady state. A person of ordinary skill would recognize that raising the temperature of a heating element **103** or **104** draws more current than maintaining the temperature. By way of example, if a user activates electric grill **510** and selects a "HIGH" temperature, microprocessor **113** must deliver a high current to the relevant heating element **103** and/or **104** until a "HIGH" temperature has been achieved. Once microprocessor **113** recognizes that the desired "HIGH" temperature has been achieved (for example via feedback from thermocouples **121** and **122**), microprocessor **113** can reduce the current delivered in order to maintain the temperature at a steady state.

Examples of how the heating elements may operate include discrete modes, such as "HIGH," "MEDIUM," "LOW," or on a continuous spectrum measured for example in % or by a temperature. Since a higher current results in a heating element having higher temperature, a person of skill in the art would recognize that raising the temperature of heating elements **103** and **104** would draw more current than maintaining a steady state temperature.

To identify an unexpected current condition, microprocessor **113** is configured to compare a current reading from Hall Effect sensor **119** with an expected current. The current which microprocessor **113** is configured to deliver to the heating elements in any given mode (accounting for whether microprocessor **113** is raising a temperature or maintaining a steady state) is the "expected current" because it is expected to match the reading from Hall Effect sensor **119** during normal operating conditions. In other words, during normal operating conditions, the current reading from Hall Effect sensor **119** is expected to match the expected current, i.e. the current microprocessor **113** is programmed to deliver. If the current reading from Hall Effect sensor **119** does not match the expected current, it is likely that a driver failure has occurred.

The expected current value may be accessible to microprocessor **113** through internal or external memory **508.** In this way, microprocessor **113** is programmed to recognize the total amount of current that should be drawn by a normally-functioning heating element or elements in any given operating mode (or combinations of operating modes).

Should a failure condition arise, microprocessor **113** responds by disabling triac drivers **111** and **112,** thereby opening the respective triacs and cutting current through the heating elements **103** and/or **104.** In one embodiment, microprocessor **113** may optionally be programmed to re-enable the flow of current after a predetermined amount of time has passed, and to continue monitoring the current drawn. Re-enabling the flow of current may be desirable because the cause of the failure may have been temporary. By way of non-limiting example, a temporary failure condition that quickly stabilizes may be detected if the electric grill **510** was recently turned on/off, or if a temporary irregularity occurred in the power grid.

Figure 6 is a flow chart showing microprocessor **113** determining an expected current based on the electric grill's **510** operating mode, and comparing the expected current to an actual current reading received from the Hall Effect sensor **119.** If a mismatch is detected, triac drivers **111** and **112** are disabled. Moreover, Figure 6 also shows microprocessor **113** comparing a current reading from the Hall Effect **119** sensor to an overcurrent threshold, and responding to an overcurrent condition by sending trip control signal **505.** A person of ordinary skill in the art would recognize that these steps and comparisons could be performed in any order and in a number of different implementations, all of which are contemplated by the present inventions. Microprocessor **113** may repeat these operations on any desired or periodic basis.

In yet another failure example, protection circuit **100** protects against a failure of microprocessor **113.** Because microprocessor **113** controls current delivered to heating elements **103** and **104,** its failure could lead to unpredictable results that may include unsafe levels of current. To protect against a failure of microprocessor **113,** the circuit **100** may include a watchdog monitor **120** connected between microprocessor **113** and triacs **108** and **109** as shown in Figure 2.

In this situation, microprocessor **113** sends a watchdog monitor signal **504** to watchdog monitor **120** which confirms that microprocessor **113** is operating normally. Watchdog monitor **120** is configured to look for a signal from microprocessor **113** confirming its normal operation. Watchdog monitor **120** is also connected to triacs **108** and **109.** In the absence of a signal from microprocessor **113** confirming normal operation, watchdog monitor **120** disables the triacs **108** and **109,** thus preventing current from flowing to them. If microprocessor **113** subsequently returns to normal operation, watchdog monitor **120** may re-enable the flow of current. This configuration of watchdog monitor **120** allows the possibility that microprocessor **113** may return to normal operation after a period of malfunction or resetting. This is advantageous because it allows for continued operation even in scenarios where the microprocessor **113** is booting or rebooting. In other words, if the microprocessor **113** is in the process of rebooting (intentionally, or unintentionally), watchdog monitor **120** may determine that microprocessor **113** is not operating normally and disable the flow of current. But normal operation may resume once microprocessor **113** completes its boot sequence and resumes sending its signal to watchdog monitor **120.**

Figure 7 shows additional embodiments of the inventions. For example, shown in Figure 7 is an embodiment in which zero crossing detection unit **110** is connected directly to line **101** and neutral **102,** without any intermediary transformer. Also shown is an embodiment in which ground fault detection unit **117** is connected to power (in this case, 12 V, but other voltages are also contemplated) through the AC/DC power converters **114.** Zero crossing detection unit **110** and ground fault detection unit **117** may perform the functions described herein when configured as shown in Figure 2, Figure 7, or any other number of configurations.

Figure 7 further discloses relays **701** and **702,** which are configured in parallel with TriACs **108** and **109,** respectively. Relays **701** and **702** are controlled via control line (not shown) by microprocessor **113** for controlling the delivery of current to heating elements **103** and **104,** respectively. Because of the parallel configuration between relays **701, 702** and TriACs **108, 109,** current can be delivered to the heating elements **103, 104** by activating either a relay or a TriAC. Stated another way, microprocessor **113** can use either the respective TriAC **108, 109** or the respective relay **701, 702** to deliver current to heating elements **103, 104.**

An advantage of having two components (a relay and a TriAC) which can each deliver current to the heating elements **103, 104,** is that microprocessor **113** can alternate between the two components to reduce heat generation. For example, delivering 100% power to heating elements **103, 104** may cause TriACs **108, 109** to overheat when active. More specifically, heating elements **103, 104** may draw a relatively high amount of current when a high temperature is desired, and delivering said current through TriACs **108, 109** for a prolonged period of time may cause TriACs **108, 109** to overheat and eventually deteriorate. To avoid this, microprocessor **113** may deactivate TriACs **108, 109** and instead activate relays **701, 702** when delivering a "HIGH," or relatively high current to heating elements **103, 104.** Current then flows to heating elements **103** and/or **104** through relays **701** and/or **702,** respectively, thereby protecting TriACs **108, 109** from overheating.

Figure 7 further shows an embodiment of microprocessor **113** having the functionality of band controller **703.** A person of skill in the art, having the benefit of this disclosure, would understand that band controller **703** may be a physical and/or virtual subcomponent of microprocessor **113,** or may alternatively be a separate hardware and/or software component. In embodiments of the inventions, band controller **703** may be configured to receive a target temperature via a user input (including wireless inputs), and to control the amount of power (i.e. current) delivered to heating elements **103, 104** to achieve the user-selected target temperature.

Band controller **703** may use hardware and software applications to achieve and maintain target temperatures at heating elements **103, 104** by controlling the amount of current delivered. Band controller **703** may receive feedback from thermocouples **121, 122,** which may be positioned proximate to heating elements **103, 104,** and use such feedback to determine when a target temperature has been achieved. In embodiments of the inventions, it may be desirable to estimate the ambient temperature within the grill's cook box using thermocouples **121, 122.** There are scenarios in which the ambient temperature (e.g. the temperature at a position of six or eight inches above the heating elements) may not be identical to the temperature at heating elements **103, 104,** especially when operating at higher temperatures. Because food may be positioned throughout a grill's cook box, for example on a grate positioned a few inches above heating elements **103, 104,** it may be desirable for band controller **703** (and microprocessor **113**) to operate based on an estimated ambient temperature, rather than the temperature at heating elements **103, 104.** Operating based on the ambient temperature provides a more precise measurement of a food's temperature, and therefore a more precise measurement of a food's doneness.

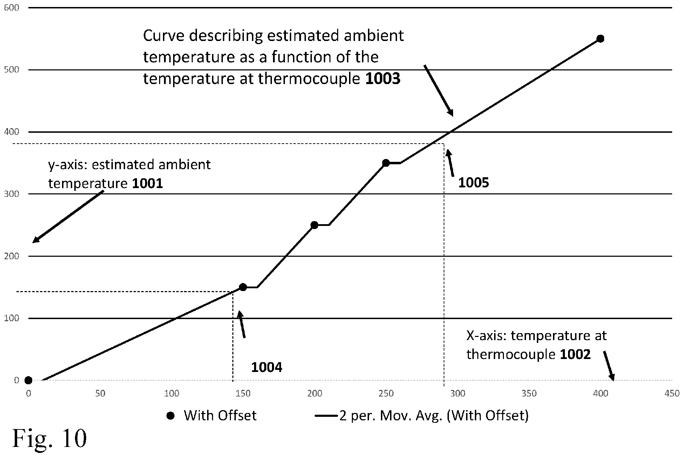

By way of example, Figure 10 shows Applicants' test data for accurately estimating the ambient temperature **1001,** based on the temperature **1002** at thermocouples **121, 122.** On its x-axis, Figure 10 shows a temperature **1002** measured at thermocouples **121, 122.** On its y-axis, Figure 10 shows a corresponding estimated ambient temperature **1001.** The curve **1003** shows the estimated ambient temperature (y-axis) as a function of the measured temperature (x-axis). The estimated ambient temperature of Figure 10 was measured a few inches above a heating element, at a position where a user may configure a cooking grate. It becomes clear that, at higher temperatures, the ambient temperature diverges from the measured temperature at the thermocouples - in other words, at higher temperatures, the estimated ambient temperature at a position above a heating element rises faster than the temperature of the heating element. By way of example, at reference point **1004,** the estimated ambient temperature and the temperature at the thermocouples **1002** are both roughly equal, at 150F. At a higher temperature (e.g. reference point **1005),** the temperature at the thermocouple may be 300F, whereas the estimated ambient temperature has risen to approximately 400F. Thus, at higher temperatures, a higher offset is required in order to accurately estimate the ambient temperature.

Using the offsets indicated by Figure 10, microprocessor **113,** and/or band controller **703,** may be adapted and configured with hardware and/or software to calculate an estimated ambient temperature based on a measured temperature at thermocouples **121, 122.** It should be understood that the offsets of Figure 10 are provided as an example only, and may be increased or decreased depending on factors such as the height of a cooking grate, and other factors which may affect ambient conditions. Moreover, microprocessor **113** and/or band controller **703** may use such an estimated ambient temperature as part of a feedback loop to determine when a target temperature is reached. In other words, in some embodiments, a target temperature may refer to the estimated ambient temperature, and in other embodiments it may refer to the temperature at thermocouples **121, 122.**

It is contemplated that yet further embodiments may use a food probe (not shown) to measure a food's temperature and determine when a target temperature is reached based on a temperature reading from the food probe. A food probe is a temperature sensing device which may be inserted by a user into a food - such as a steak or a chicken breast - to measure the food's internal temperature. Using a food probe to sense temperature may be advantageous to some cooking styles because it can provide an accurate determination of a food's internal temperature, and by extension its doneness.

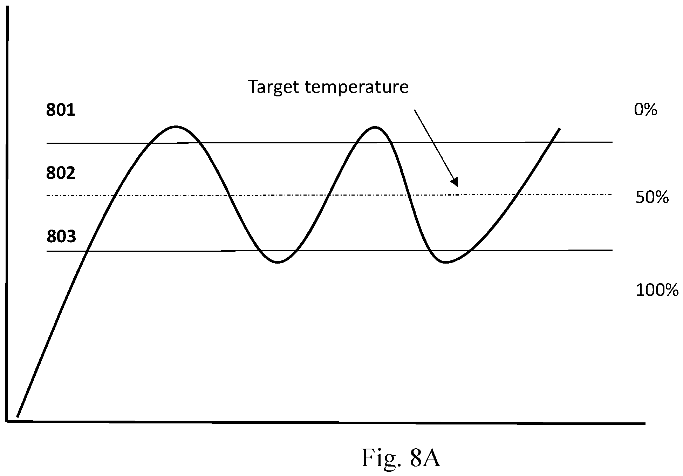

To consistently maintain a target temperature, band controller **703** may determine temperature "bands" surrounding a given target temperature, where said bands indicate the amount of power (i.e. current) to deliver to a heating element **103, 104** as a target temperature is approached. In embodiments of the inventions, the bands create zones representing 0%, 50%, and 100% power. The zone above **801** represents a temperature zone in which 0% power is delivered; the zone between **801** and **803** represents a zone in which 50% power is delivered, and the zone below **803** represents 100% power delivery. Band controller **703** uses the bands to determine an appropriate power (e.g. electric current) to deliver to a heating element to achieve and maintain the desired target temperature. By way of example, seen for example in Figure 8A, band controller **703** may deliver 100% power until a desired target temperature **802** is achieved, and then reduce power to 50% until an upper band **801** is reached. If the upper band **801** is exceeded, band controller **703** reduces power to 0%. If the temperature drops to (or below) a lower band **803,** power is again increased to 100%. Band controller **703** continuously receives feedback from thermocouples **121, 122,** and compares the feedback (in some embodiments, the estimated ambient temperature described above) to appropriate temperature bands. In this way, temperature fluctuates between lower band **803** and upper band **801,** and approximates the target temperature.

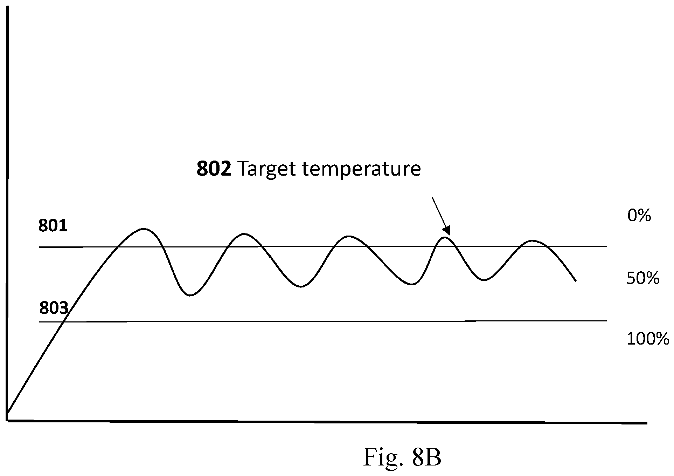

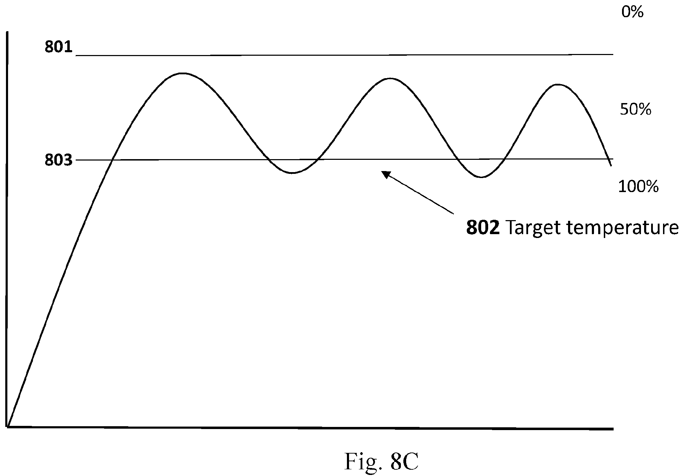

Moreover, in embodiments of the invention, band controller **703** dynamically shifts the bands depending on the desired target temperature. Dynamically shifting the temperature bands allows for more precise temperature control, allowing a user to approximately maintain the selected target temperature. This occurs because, at lower temperatures, a 50% power setting may cause the electric grills temperature to continue increasing past the desired target temperature. On the other hand, at higher temperatures, delivering 50% power may cause the temperature to begin dropping below the desired target temperature. Therefore, band controller **703** may compensate by lowering the bands for a lower desired target temperature. On the other hand, at a higher temperature range, band controller **703** may shift the bands higher. An example of lowered temperature bands corresponding to a lower desired target temperature is shown in Figure 8B. In Figure 8B, a lower target temperature has been selected, and band controller **703** shifted the upper band **(801)** to correspond to the target temperature. Conversely, Figure 8C shows a relatively high target temperature, for which band controller **703** raised the power bands such that the target temperature **802** coincides with the lower band **(803).** In Figure 8B, the target temperature overlaps with the power band **801;** whereas in Figure 8C the target temperature **802** overlaps with the power band **803.** Exemplary values for power bands are provided in the following table:

| Desired target temperature (T) | Lower temperature band (100%) | Upper temperature band (0%) |
|---|---|---|
| T < 250F | T-25F | T |
| 250F < T < 400F | T-10F | T+10F |
| 400F < T | T | T+15F |

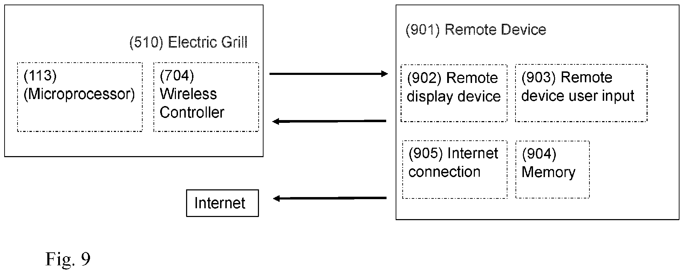

In embodiments having multiple heating elements capable of independent operation, users can input multiple target temperatures. For example, an embodiment having two independent heating elements **103, 104,** may receive two separate target temperatures, each corresponding to one heating element. Target temperatures may be communicated to band controller **703** through any number of possible user inputs. By way of non-limiting examples, possible user inputs include knobs **501, 502.** User inputs can also be received wirelessly, via wireless controller **704,** from a wireless device configured to communicate with wireless controller **704.** In such an embodiment, wireless controller **704** may be configured to wirelessly communicate with a remote device via Wi-Fi, Bluetooth, radio frequency, or any other form of wireless communication. Remote devices include cell phones, tablets, laptops, computers, and any other form of device capable of wireless communication. Figure 9 shows an exemplary remote device **901,** having a display **902** and user input device **903,** communicating with the electric grill **510**'s wireless controller **704.** In a non-limiting example, remote device **901** may be a cell phone with a touch screen as its input device **903.** Regardless of the type of device used, it is contemplated that remote device **901** may be configured to receive a user input representing, among other things, one or more target temperatures, and wirelessly communicate said target temperature to electric grill **510** via wireless controller **704.**

In exemplary embodiments, remote device **901** may be adapted and configured to directly receive a desired target temperature from a user. In such embodiments, a user can use input device **903** to select a target temperature. In other exemplary embodiments, remote device **901** may be adapted and configured to receive a user input selecting a type of meat to be cooked, and a desired doneness, and to determine the appropriate target temperature for the user's selection. In such embodiments, remote device **901** may have a memory **904** storing the appropriate target temperature associated with a desired food profile. A user thus uses input device **903** to select a food profile, and remote device **901** wirelessly communicates the associated target temperature. In addition to controlling target temperatures, embodiments of remote device **901** are adapted and configured to send an "on" and/or "off' signal wirelessly, via wireless controller **704,** to microprocessor **113** and/or band controller **703.** As such, a user can control both the desired target temperature of the electric grill **510,** as well as turning it on and off.

Additional examples of wireless communication between remote device **901** and electric grill **510** (via wireless controller **704**) include the ability to control settings for display **503** remotely, from remote device **901.** Thus, remote device **901** may be adapted and configured to wirelessly control the information displayed on electric grill **510**'s display **503.** Remote device **901** may control which information is displayed on display **503,** and allow a user to toggle between (C) Celsius and (F) Fahrenheit with respect to temperature measurements. Such information may include the electric grill **510**'s current temperature, ambient temperature, target temperature, as well as timers indicating how long the grill has been active, how long a food has been cooking, or how much time remains until a food reaches its target temperature. Such information may further be wirelessly transmitted from electric grill **510,** via wireless controller **704,** to remote device **901.**

In turn, remote device **901** may provide such information to a user on a remote device display **902,** and may further use said information to wirelessly turn electric grill **510** off, or reduce its desired target temperature, if a predetermined temperature has been reached, or if a food has been cooking for a predetermined time period. In exemplary embodiments, food profiles are stored in memory **904,** where such food profiles indicate either the appropriate target temperature and/or an appropriate cooking time for a given food. Remote device **901** may monitor information received wirelessly from electric grill **510** and determine if an appropriate temperature or cooking time has been reached. Remote device **901** may also be adapted and configured to turn off electric grill **510** once that happens, and/or to provide an audible or visual alert. Such an audible and/or visual alert may be provided on the remote device **901,** at the electric grill **510,** or both.

Moreover, it is contemplated that embodiments of the inventions may use wireless communications to deliver error codes from the electric grill **510** to a remote device **901,** where said error codes may be indicative of an unsafe current condition as described further herein. Delivering error codes to a remote device **901** has the advantage of allowing a user to remotely understand when an unsafe current condition has occurred, and remote device **901** may further display safety tips for correcting the unsafe current condition as well as recording the conditions that lead to the unsafe condition.

Error codes may be determined by microprocessor **113** acting in conjunction with the protection circuitry **100.** As described further herein, microprocessor **113** may be in communication, via control lines, with Ground Fault Detection Unit **117** and Hall Effect sensor **119.** Thus, microprocessor **113** may be adapted and configured to receive a control signal from Ground Fault Detection Unit **117** indicating that a ground fault has been detected. Likewise, microprocessor **113** may be adapted and configured to use signals from Hall Effect sensor **119** to recognize errors in delivering current to heating elements **103** and **104.** As described further herein, a reading of zero current from Hall Effect sensor **119** indicates that heating elements **103** and **104** are not receiving any current, whereas an unexpectedly high current reading indicates that too much current is flowing to heating elements **103** and **104** (e.g. an "over-current" scenario).

In embodiments of the inventions, microprocessor **113** is adapted and configured to recognize these errors and wirelessly communicate, via wireless controller **704,** an error code corresponding to the error which occurred. For example, an error code of "01" may indicate that a ground fault has been detected; "02" may indicate that Hall Effect sensor **119** has determined that no current (or an unexpected current) is flowing to heating elements **103** and/or **104;** and "03" may indicate that Hall Effect sensor **119** detected an unexpectedly high current flowing to heating elements **103** and/or **104.** In embodiments where microprocessor **113** is a chip including a "self-check" feature, an error code of "04" may be sent if the self-check pin determines a failure of microprocessor **113.** A person of ordinary skill in the art would recognize that any variety of codes may be used to indicate each error. In response to an error, an audible or visual alert may be signaled at electric grill **510,** including for example on display **503.** Likewise, remote device **901** may also provide an audible or visual alert upon receiving an error code.

Remote device **901** may be adapted and configured to wirelessly receive error codes and display, on display **902,** a message identifying the type of error to the user. Such an error message may be accompanied by an audible or visual alert at remote device **901.** Remote device **901** may further be adapted and configured to display a message, saved in memory **904,** explaining steps that a user should take to correct the error. For example, as explained further herein, protection circuitry **100** may be configured to trip a relay **106** and/or **107** in response to a ground fault. Therefore, if microprocessor **113** sends an error code (e.g. "01") indicating a ground fault to remote device **901,** remote device **901** may display a message alerting a user that a ground fault has occurred and prompting the user to reset relay **106** and/or **107.**

In response to an error "02," remote device **901** may be adapted and configured to alert the user that no current is flowing to heating element **103** and/or **104.** The absence of current flowing may be indicative of an open circuit, which may occur, for example, if a heating element **103, 104** is not properly installed. Thus, remote device **901** may display a message prompting a user to uninstall, and re-install, heating elements **103, 104.** If the error persists, remote device **801** may prompt the user to contact the manufacturer.

Similarly, if error code "03" is received, an over-current has occurred. One possible cause of an over-current may be that a user has installed an incompatible, or faulty, heating element having an incorrect resistance value. (A heating element with an incorrectly low resistance will cause an inappropriately high current to flow through it). For example, a heating element designed to work at 120V would have a resistance value that is too low to function at 230V, causing an overcurrent. Thus, a user may be prompted to check the heating element, or replace it with a new one.

Remote device **901** and/or microprocessor **113** may create a log of errors and store the error log in a memory. Such an error log may include a recording of each error that occurred. Moreover, in embodiments where remote device **901** receives status information (such as the temperature of heating elements, ambient temperature, temperature targets, cooking time, etc.) from electric grill **510,** such status information may also be recorded in the error log. Status information may be delivered continuously, or in response to an error. By way of example, it may be advantageous to record how long a grill had been cooking before an error occurred, the grill's temperature at the time of an error, and other related information. An error log may be helpful in diagnosing errors. It should be understood that the error log may be created and/or stored on the remote device **901,** electric grill **510** (or microprocessor **113**), or both. A person of skill in the art would understand that a wide variety of parameters may be recorded and stored as part of an error log.

In some embodiments, remote device **901** may have an internet connection **905.** Internet connection **905** allows remote device **901** to optionally send a recorded error log to a third party, such as an electric grill's manufacturer. A manufacturer can therefore better understand the error that occurred and the conditions surrounding the error. This can lead to product fixes and improvements.

The present inventions also provide methods for reducing the risk of unsafe electric conditions during grilling. In a preferred embodiment, a user may use an electric grill **510** to deliver current to one or more electric heating elements **103** and/or **104** which may be connected to a voltage line **101** and a neutral line **102** through triacs **108** and **109,** and latch relays **106** and **107.** When heating element **103** or **104** is activated by the user, a current transformer **105** in the electric grill **510**'s protection circuitry **100** measures a difference, if any, in the current drawn by electric grill **510** and the current returned from electric grill **510.** If a current difference is detected, methods of the present inventions generate an electric signal to activate a trip controller **118** connected to a latch relay **106** and/or **107.**

Methods of the present inventions may additionally include using the electric grill **510**'s protection circuitry **100** to measure current being delivered to a heating element **103** or **104** with a Hall Effect sensor **119** and conveying the measured current to a microprocessor **113.** By activating the electric grill **510** and its protection circuitry **100,** the microprocessor **113** compares the measured current to a predetermined current threshold. The predetermined current threshold may be dynamically selected based on the current operating mode selected by a user. If the measured current exceeds the predetermined threshold while the electric grill **510** is in use, the present inventions may include the step of disabling the flow of current by tripping a latch relay **106** and/or **107,** or disabling a triac **108** and/or **109.**

In additional embodiments, signals indicative of normal operation from the microprocessor **113** to a watchdog monitor **120** are sent. In turn, watchdog monitor **120** may enable triacs **108** and/or **109** to permit the flow of electricity to heating elements **103** and/or **104** during normal operation, and disable the flow of electricity during a phase of abnormal operation.

The devices and methods described above may be used to provide a safer electric grill experience. Various embodiments allow a user to activate a knob **501** and/or **502** (or other input means, such as wireless) to grill food using heat from heating elements **103** and/or **104,** which in turn are controlled by a microprocessor **113.** Display **503** may convey, among other things, the current temperature to the user to allow the user to decide when to put food onto a grate or how long to leave food cooking. A user may be using an electric grill **510** that has been exposed to harsh conditions for a prolonged period of time and which has electric components that may leak current. Embodiments of the invention provide a current transformer **105** which functions together with ground fault detection unit **117** and trip controller **118** to detect current leakage and, in response, trips latch relays **106** and **107.** Although grilling will be halted, the user will remain safe from the leaking current. A user may respond, for example, by removing and re-installing heating elements **103, 104,** and pushing a reset button **511** or similar switch. Provided the current leakage has been resolved, normal operation can continue.

During normal cooking, a heating element **103, 104** or other component may become unintentionally loose, or may be damaged from heat or other environmental factors. A possible result is that electric grill **510** may draw an unsafe current, which is detected by microprocessor **113** via a signal from Hall Effect sensor **119.** The microprocessor **113** may respond by activating a trip controller **119** and thereby opening latches **106** and **107.** As described above, the result is a stoppage of current and the user may attempt to restart the electric grill **510** via reset button **511.**

Similarly, an unsafe condition may lead heater **103** and/or **104** to draw an amount of current that differs from the amount expected based on the user settings of knobs **501** and/or **502.** In response, embodiments of the invention provide a microprocessor **113** which may disable triacs **108/109** (via their drivers) to stop the flow of current. A user may be alerted via display **503,** but latches **106** and **107** are not tripped in this case, so in this instance, the user may not have to reset the button **511.**

Further, embodiments of the invention may include a watchdog monitor **120** which may be provided to monitor the correct operation of microprocessor **113** while electric grill **510** is in use by a user. Watchdog monitor **120** may disable triacs **108/109** if microprocessor **113** enters an abnormal operating state, including a possible reboot. A user does not have to reset the button **511** and may wait for microprocessor **113** to return to normal operation to resume grilling.

The hardware and specifically configured microprocessor may be provided to a user to ensure a safe grilling experience. A person of skill in the art would recognize that electric grills having various combinations of the embodiments described above are possible, and not every feature must necessarily be included in each embodiment. Moreover, although the present inventions have particular applicability to grills for outdoor use, it will be understood by those of skill in the art that the present inventions may be used on a variety of grills or other devices, whether for indoor or outdoor use.

The present inventions also include methods for using a remote device **901,** such as a cell phone or tablet, to communicate with an electric grill **510.** For example, a user may use a cell phone to wirelessly communicate with electric grill **510** and activate it. Moreover, a user uses a remote device user input **903,** such as a touch screen, to select a target desired target temperature. In embodiments of the invention, a user may select a desired cooking profile, and remote device **901** retrieves, from memory **904,** the associated temperature, which is communicated wirelessly to microprocessor **113** and/or band controller **703.**

In response, microprocessor **113,** and band controller **703,** raise the power delivered to heating elements **103, 104,** until a desired target temperature is achieved. Band controller **703** may be used to maintain a temperature within the range of predetermined bands. In this way, a user may use electric grill **510** to cook a food item as long as no error has occurred at electric grill **510** (by extension, at protection circuitry **100**). During normal operations, the user may wirelessly receive status information from electric grill **510** on remote device **901,** including various parameters concerning the temperature, time, and status of the grill.

If an unsafe current condition occurs, microprocessor **113** may detect it, in accordance with the present disclosure, and send an error code to the user at the user's remote device **901.** An audible and/or visual alert may be provided at electric grill **510** and/or remote device **901** to alert the user that an unsafe current condition has occurred. Moreover, the user may be presented with a message explaining the type of error which has occurred and providing suggestions for how to fix the error. In embodiments of the invention, the user may opt to save an error log, which may contain the type of error that occurred as well as various information surrounding the grill's operating conditions at the time of the error. The error log may then be sent over the internet to a manufacturer for further diagnoses and repair information.

The above description is not intended to limit the meaning of the words used in or the scope of the following claims that define the invention. Rather the descriptions and illustrations have been provided to aid in understanding the various embodiments. It is contemplated that future modifications in structure, function or result will exist that are not substantial changes and that all such insubstantial changes in what is claims are intended to covered by the claims. Thus, while preferred embodiments of the present inventions have been illustrated and described, one of skill in the art will understand that numerous changes and modifications can be made without departing from the claimed invention. In addition, although the term "claimed invention" or "present invention" is sometimes used herein in the singular, it will be understood that there are a plurality of inventions as described and claimed.

Various features of the present inventions are set forth in the following claims.

## Claims

1. An electric grill, comprising:
a heating element connectable to a voltage line and a neutral line;
a user input device for selecting an operating mode of the heating element;
a temperature probe to measure a temperature of the heating element;
a microprocessor in communication with a memory;
wherein the microprocessor is to:
estimate an ambient temperature at a location within a cook box of the electric grill spaced apart from the temperature probe, the estimation of the ambient temperature based on the measured temperature of the heating element; and
use the estimated ambient temperature to determine when a target temperature corresponding to the selected operating mode is reached.

2. The electric grill of claim 1, further including a wireless controller in communication with the microprocessor, wherein the microprocessor is to cause the wireless controller to wirelessly transmit the estimated ambient temperature to a remote device.

3. The electric grill of claim 2, wherein the microprocessor is to wirelessly receive, via the wireless controller, a signal for controlling the operating mode of the heating element.

4. The electric grill of claim 3, wherein the received signal is indicative of an "OFF" operating mode.

5. The electric grill of claim 1, further including a ground fault detection unit configured to detect a ground fault error between the voltage line and the neutral line, the ground fault detection unit being in communication with the microprocessor.

6. The electric grill of claim 5, wherein the microprocessor further includes a self-check pin for detecting a microprocessor failure.

7. The electric grill of claim 6, wherein the microprocessor is to, in response to detecting an error condition, store an error log in the memory, the error log to include at least a first error code associated with the error condition, the first error code associated with detection of a ground fault error condition, the error log to include a second error code associated with detecting a microprocessor failure condition, and a third error code associated with detecting a current mismatch condition.

8. The electric grill of claim 7, wherein the error log further includes an active time of the electric grill, a target temperature, and a measured temperature at the time of the error condition.

9. The electric grill of claim 1, further including a display in electronic communication with the microprocessor, wherein the microprocessor is to cause presentation of at least one of the measured temperature or the estimated ambient temperature on the display.

10. A method for operation of an electric grill, the method comprising:
accessing a selected operating mode for a heating element using at least one user input device, the heating element connected to a voltage line and a neutral line;
measuring, using a temperature probe, a temperature of the heating element;
estimating an ambient temperature at a location within a cook box of the electric grill spaced apart from the heating element, the estimation of the ambient temperature based on the measured temperature of the heating element; and
using the estimated ambient temperature to determine when a target temperature corresponding to the selected operating mode is reached.

11. The method of claim 10, further including, in response to detecting an error condition, storing an error log in a memory, wherein the error log include at least a first error code associated with the error condition.

12. The method of claim 11, further including wirelessly transmitting the error log to a remote device.

13. The method of claim 10, further including:
detecting a ground fault error condition using a ground fault detection unit connected to the voltage line and the neutral line; and
responding to the ground fault error condition by sending a signal indicative of the ground fault error condition to a microprocessor.

14. The method of claim 13, further including using a self-check pin of the microprocessor to detect a microprocessor failure condition.

15. The method of claim 10, further including presenting, on a display at the electric grill, the estimated ambient temperature.
